# FASCICULE DE BREVET EUROPEEN

(11) **EP 2 387 189 B1**
(45) Date de publication et mention de la délivrance du brevet: **09.08.2017**
(21) Numéro de dépôt: 11165676.5
(22) Date de dépôt: 11.05.2011
(51) Int. Cl.: H04L 25/03, H04L 27/20, H04L 27/227, H04B 7/185

(54) **Procédé de démodulation de signaux d'un système multi-accès pouvant entrer en collision et équipement de mise en oeuvre**
Verfahren zur Demodulation von Signalen eines Mehrfachzugriffsystems, die untereinander eine Kollision verursachen können, und Instrumente zu deren Umsetzung
Method for demodulating signals of a multi-access system that may collide and device for implementing same

(30) Priorité: 12.05.2010 FR 1002025
(43) Date de publication de la demande: 16.11.2011
(73) Titulaire: Thales, 92400 Courbevoie (FR); CENTRE NATIONAL D'ETUDES SPATIALES, 75001 Paris (FR)
(72) Inventeur: Giraud, Jérémie, 06156 Cannes La Bocca Cedex (FR); Calmettes, Thibaud, 06156 Cannes La Bocca Cedex (FR)
(74) Mandataire: Brunelli, Gérald

(56) Documents cités:
- US-A1- 2002 037 737
- KAZUHIKO SEKI ET AL: "PHASE AMBIGUITY RESOLVER FOR PCM SOUND BROADCASTING SATELLITE SERVICE WITH LOW POWER CONSUMPTION VITERBI DEVODER EMPLOYING SST SCHEME", IEICE TRANSACTIONS ON COMMUNICATIONS, COMMUNICATIONS SOCIETY, TOKYO, JP, vol. E78-B, no. 9, 1 septembre 1995 (1995-09-01), pages 1269-1277, XP000540859, ISSN: 0916-8516
- SCHOENEICH H ET AL: "Iterative semi-blind single-antenna cochannel interference cancellation and tight lower bound for joint maximum-likelihood sequence estimation", SIGNAL PROCESSING, ELSEVIER SCIENCE PUBLISHERS B.V. AMSTERDAM, NL, vol. 84, no. 11, 1 novembre 2004 (2004-11-01), pages 1991-2004, XP004591295, ISSN: 0165-1684, DOI: DOI:10.1016/J.SIGPRO.2004.07.012
- JON HAMKINS: "An Analytic Technique to Separate Cochannel FM Signals", IEEE TRANSACTIONS ON COMMUNICATIONS, IEEE SERVICE CENTER, PISCATAWAY, NJ. USA, vol. 48, no. 4, 1 avril 2000 (2000-04-01), pages 543-546, XP011010815, ISSN: 0090-6778
- BAR-NESS Y ET AL: "Adaptive co-channel interference cancellation and signal separation method", 19890611; 19890611 - 19890614, 11 juin 1989 (1989-06-11), pages 825-830, XP010081182,
- Pierre Barthelemy: "A Model-Based Receiver for CPM Signals in a Cochannel Interference Limited Environment", Thesis , mai 2002 (2002-05), pages 1-81, XP002626677, Blacksburg, Virginia Extrait de l'Internet: URL:http://citeseerx.ist.psu.edu/viewdoc/d ownload?doi=10.1.1.6.4042&rep=rep1&type=pd f [extrait le 2011-03-04]
- Peter A. Mutphy, Gary E. Ford: "Cochannel Demodulation for Continuous Phase Modulated Signals", Proceedings of Asilomar-29. Signals, Systems and Computers 1995 , 1 novembre 1995 (1995-11-01), pages 330-334, XP002626678, Extrait de l'Internet: URL:http://ieeexplore.ieee.org/xpls/abs_al l.jsp?arnumber=540566&tag=1 [extrait le 2011-03-07]

## Description

La présente invention se rapporte à un procédé de démodulation de signaux d'un système multi-accès à transmission selon un protocole de multiplexage, dans lequel deux signaux peuvent entrer en collision mutuelle lorsqu'ils arrivent simultanément à un récepteur. Elle s'applique plus particulièrement, mais non exclusivement, à des signaux AIS.

Parmi les signaux à multiplexage temporel, on connait ceux du système AIS. L'AIS (Automatic Identification System) est un système de communication public entre navires qui permet de limiter les heurts entre ces navires et qui permet une surveillance du trafic maritime en vue des côtes grâce à des stations côtières qui écoutent les communications. Ce système met avantageusement en oeuvre des satellites pour relayer les communications sur un large territoire. Pour permettre à l'AIS par satellite d'avoir des performances acceptables compte tenu des exigences de performances pour la sécurité maritime, il est nécessaire de mettre en place le plus d'outils possible pour exploiter les signaux en collision, afin d'extraire le message d'au moins l'un d'eux.

Les circonstances dans lesquelles des signaux peuvent entrer en collision sont multiples. Les signaux en collision proviennent de cellules de SO-TDMA (Self Organizing Time Division Multiple Access) différentes. Les écarts de fréquence (Doppler), de puissance (distance/perte d'espace libre, gain d'antenne) et de synchronisation (distance/temps de propagation) entre ces différents signaux varient, pouvant permettre leur discrimination.

Des solutions existent (démodulateur simple, SIC, c'est-à-dire « Sequential Interference Canceller ») pour donner accès à au moins un des signaux en collision, dans le cas où il existe suffisamment de paramètres discriminants entre eux : différence de synchronisation, différence de porteuse ou différence de puissance.

Lorsque lesdits paramètres de deux signaux sont trop proches, les performances en termes de taux d'erreur sur bit se dégradent grandement. En particulier, dans les pires cas de collision entre deux signaux (i.e. signaux reçus à la même puissance et avec des fréquences Doppler identiques), l'accès aux deux signaux devient impossible.

L'article « Co-Channel Demodulation for Continuous-Phase Modulated Signals, Peter A. Murphy & Gary E. Ford, IEEE proceedings » propose un procédé, le "Joint Maximum Likelihood Sequence Estimation (J-MLSE)", donnant des possibilités de démodulation de deux signaux dans certaines circonstances de collisions, rencontrées dans les systèmes de communication cellulaire. Ainsi, ce procédé s'applique dans les cas de deux signaux de même fréquence porteuse et dont les contenus numériques sont synchronisés à la réception. Ce type de procédé apparaît donc valide, mais dans des circonstances trop restrictives, qui ne seront pas rencontrés dans d'autres systèmes, comme en particulier l'AIS par satellite. US 7058422 B2 décrit l'usage de la méthode de Viterbi pour séparer deux abonnés en collision. La présente invention a pour objet un procédé de démodulation de deux signaux d'un système multi-accès à transmission selon un protocole de multiplexage pouvant entrer en collision mutuelle, ces deux signaux ayant des contenus numériques synchronisés ou non en réception et des fréquences porteuses, affectées du Doppler, identiques ou non, ce procédé permettant d'augmenter les performances de détection de tels signaux, en particulier des signaux AIS.

Le procédé conforme à l'invention est un procédé de démodulation de deux signaux pouvant entrer en collision mutuelle, ces signaux étant ceux d'un système multi-accès à transmission selon un protocole de multiplexage et à modulation de phase des signaux à émettre par tous les émetteurs du système, une synchronisation en temps, fréquence et phase ayant été effectuée sur ces signaux, et il est caractérisé en ce qu'il consiste, à la réception, lors de la démodulation, à mesurer la valeur de la phase du signal global formé par ces deux signaux et à déterminer la valeur des états de phase de chacun de ces deux signaux et donc leur contenus numériques en utilisant la méthode de Viterbi pour éliminer des ambiguïtés se produisant pour des cas où les phases des deux signaux sont distantes de kπ.
La démodulation de Viterbi consiste, dans le cas où les deux signaux sont « confondus », c'est à dire de même fréquence porteuse et dont les transitions de bits coïncident, à procéder aux itérations suivantes : dans un premier temps on mesure la phase du signal global prélevée aux instants de transition de bits, qui seront donc communs aux deux signaux, dans un deuxième temps, à estimer, en fonction de la paire d'états de phase (un pour chaque signal S1 et S2) provenant de l'itération précédente, et pour chaque hypothèse de paire de bits reçue (un pour chaque signal S1 et S2), la valeur attendue de la phase globale, cette phase estimée étant fonction de l'écart de puissance des deux signaux, des états de phases des deux signaux, ainsi que des valeurs de décalage de phase de ces deux signaux dus à des longueurs de parcours différentes (ϕ_{off1} et ϕ_{off2}), dans un troisième temps à calculer la métrique associée à chaque hypothèse de paire de bits reçue, cette métrique étant la distance entre les phases globales mesurée et estimée ; et dans un dernier temps à conserver la paire de trains de bits (un pour chaque signal S1 et S2) offrant la plus petite métrique cumulée, cette métrique cumulée étant la somme de la métrique cumulée calculée à l'itération précédente et de la métrique -calculée dans la troisième étape de l'itération en cours.

La présente invention sera mieux comprise à la lecture de la description détaillée d'un mode de réalisation, pris à titre d'exemple non limitatif et illustré par le dessin annexé, sur lequel :
- les figures 1 à 3 sont des diagrammes de phase montrant le principe de construction classique de modulation GMSK des signaux émis par un système AIS, signaux que l'invention traite au niveau de la démodulation à la réception,
- les figures 4 à 8 sont des diagrammes d'un exemple de détermination de la valeur des états de phase et de Fresnel de chacun de deux signaux AIS entrant en collision mutuelle, conformément à la présente invention.

La présente invention est décrite ci-dessous en référence à deux signaux provenant de deux navires différents et communiquant sur le même système AIS. On suppose que ces deux signaux entrent en collision mutuelle à leur réception dans un centre de traitement (qui peut faire partie de la charge utile d'un satellite pour un système d'écoute de signaux AIS, ou bien être un centre de mission ou de contrôle pour divers autres systèmes) mais il est bien entendu que l'invention n'est pas limitée à ces signaux AIS, et qu'elle peut être mise en oeuvre dans tout système de communication multiplexé en temps (TDMA), en fréquence (FDMA) ou par étalement de spectre (CDMA) dans lequel plusieurs utilisateurs peuvent vouloir accéder simultanément au système de multiplexage, et pour lequel on veut éviter des blocages mutuels des demandes d'accès.

On notera que pour les collisions de plus de deux signaux, ce qui est statistiquement assez probable pour qu'on s'y intéresse, le procédé de l'invention serait difficile à mettre en oeuvre directement. En effet :
- dans le cas de deux signaux, le procédé de l'invention consiste, pour un état de phase du signal global, à :
   - soit pointer vers une seule paire d'états de phase des deux signaux composants,
   - soit pointer vers deux paires, et l'ambigüité est alors levée grâce au décodage Viterbi
- dans le cas de trois signaux, la combinatoire est trop importante : un état de phase du signal global renverra très certainement vers un nombre trop important de triplets d'états de phase et il y aura généralement trop d'ambigüités que l'on ne pourra pas résoudre. Toutefois, on peut attendre d'être dans une trame favorable (avec deux signaux en collision) pour résoudre ce problème comme décrit ici.

La présente invention part du principe existant de démodulation cohérente d'ensembles multi-signaux modulés par codage de phase, en l'occurrence la modulation GMSK (Gaussian Minimum-[phase]- Shift Keying) pour l'étendre au cas où le signal reçu est une somme (c'est-à-dire une collision) de deux signaux de caractéristiques similaires. Il est bien entendu que la modulation GMSK n'est pas la seule pouvant être mise en oeuvre par l'invention, et que d'autres modulations de phase peuvent être utilisées, telles que MSK (pour des signaux incidents désynchronisés).

Le procédé de l'invention est mis en oeuvre après synchronisation des deux signaux reçus en collision mutuelle. Cette synchronisation porte sur l'information de temps (en repérant les transitions de bit du signal soumis à synchronisation), de fréquence (en identifiant la fréquence porteuse du signal soumis à synchronisation) et de phase (en déterminant la phase absolue du signal soumis à synchronisation). Une telle synchronisation est possible pour l'AIS, en effectuant des corrélations du signal reçu avec des « training sequences », qui sont des séquences de bits contenus dans chaque signal et connues des utilisateurs du système AIS. Une fois la synchronisation effectuée sur chaque signal, on démodule le signal total (pour le descendre en fréquence) en utilisant la porteuse mesurée sur le signal le plus fort, et on échantillonne le signal total aux instants de transitions de bit du signal le plus fort. Par convention, dans la suite de la description, on notera S1 le signal le plus fort, S2 le signal le plus faible.

Le procédé de l'invention consiste essentiellement à déterminer la valeur de la phase du signal global formé de deux signaux entrant en collision, et à déterminer les valeurs des états de phase de chacun de ces deux signaux et donc leurs contenus numériques en utilisant la méthode de Viterbi pour éliminer des ambiguïtés se produisant pour des cas où les phases des deux signaux sont distantes de kπ

On rappelle ici que dans le cas de l'AIS, la modulation GMSK des signaux émis par les différents navires du même système est construite comme suit : la phase du signal émis subit une rampe de π/2 radians (sur la durée d'un bit) lorsque la valeur de bit émis est 1, et -π/2 radians lorsque la valeur de bit émis est 0. De plus, un filtre passe-bas gaussien est appliqué au signal émis, après modulation MSK.

A la réception au centre de contrôle d'un signal AIS, la valeur de la phase du signal dépend de :
- ϕₛ(n) : L'état de phase transmis par le navire, à l'instant d'émission (lié aux bits contenus dans le message),
- ϕ_{off} : l'offset de phase, lié à la distance parcourue entre le navire et le récepteur,
- ϕ_{d}(n) : le drift résiduel de phase lié aux erreurs de synchro fréquence.
Nous considérons ci-dessous le cas de deux signaux reçus simultanément.
Pour décrire la solution de l'invention, nous nous placerons d'abord dans le cas où :
- Ces deux signaux S1, S2 sont «confondus»: ils ont la même fréquence porteuse et les transitions de bits coïncident,
- Les composantes ϕ_{off1} et ϕ_{off2} sont des composantes aléatoires (liées aux distances parcourues par chaque signal),
- On effectue une synchronisation de temps et de fréquence parfaite sur le signal S1 (par hypothèse le plus puissant).
La solution de l'invention est basée sur deux principaux mécanismes :
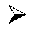 1. il est possible, connaissant la valeur de la phase du signal global (somme des deux signaux composants), de déduire la valeur des états de phase de chacun des deux signaux AIS entrant en collision. Pour illustrer cette possibilité, le cas particulier suivant est proposé.
   Considérons la structure du signal et de ses composants S1 et S2 dans le cas où les bits transmis sont respectivement :
   - signal 1 : bit#n = 0 et bit#n+1 = 0, signal 2 : bit#n = 1 et bit#n+1 = 0
   - signal 1 : bit#n = 0 et bit#n+1 = 0, signal 2 : bit#n = 0 et bit#n+1 = 1
   - signal 1 : bit#n = 0 et bit#n+1 = 0, signal 2 : bit#n = 0 et bit#n+1 = 0

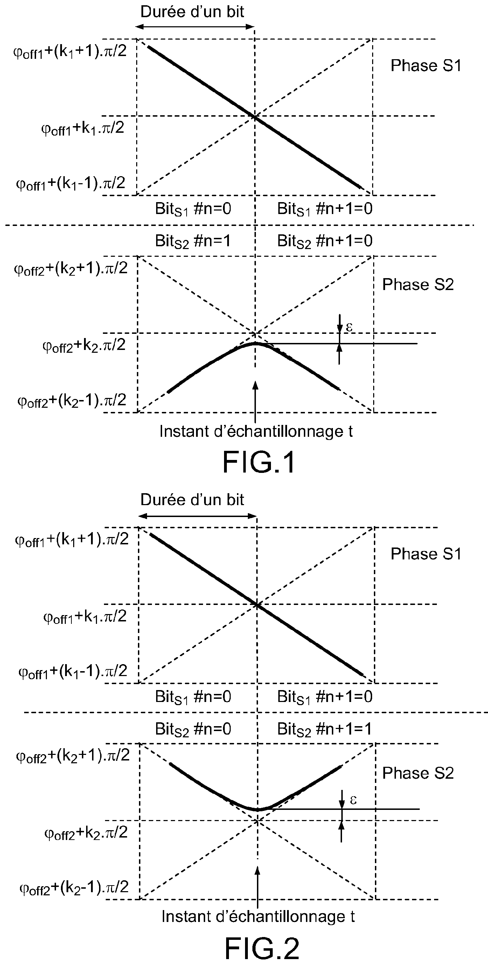

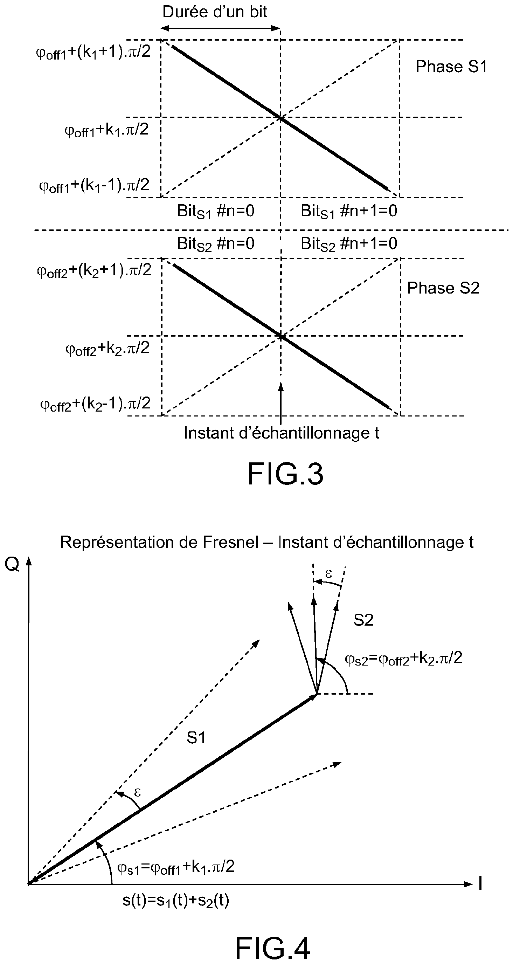

On a tracé en figures 1 à 3 les schémas d'évolution de phase classiques obtenus après modulation GMSK pour les cas cités ci-dessus. Chacun de ces schémas comporte quatre quadrants (2 supérieurs : signal 1, 2 inférieurs : signal 2) correspondant respectivement, de gauche à droite et de haut en bas aux cas suivants :
- pour la figure 1 : bit (n)=0, bit(n+1) =0, bit (n)=1, bit (n+1)=0,
- Pour la figure 2 : bit (n)=0, bit(n+1) =0, bit (n)=0, bit (n+1)=1,
- Pour la figure 3 : bit (n)=0, bit(n+1) =0, bit (n)=0, bit (n+1)=0

On a tracé sur ces schémas les rampes correspondant respectivement à π/2 radians et -π/2 radians et se coupant au centre O des quatre quadrants. Dans le cas d'une transition de bits 0-1 ou 1-0 (signal 2 sur figures 1 et 2), les courbes représentatives de l'évolution de la phase ne passent pas par O, mais s'incurvent à proximité de ce centre O, à une distance **ε** de celui-ci du fait du filtrage gaussien, alors que dans le cas de transitions 1-1 et 0-0 (figure 3), ces courbes de phase passent par O. La distance **ε** est d'autant plus importante que la bande du filtre gaussien utilisé est étroite. A l'inverse, pour une bande large, epsilon se réduit jusqu'à s'annuler (bande infinie, c'est-à-dire qu'il n'y a pas de filtrage). Dans ce cas là, c'est du MSK, et les phases passent par O quelles que soient les transitions de bit considérées.

Dans ces cas-là, les différentes représentations de Fresnel du signal global à l'instant d'échantillonnage indiqué (transition de bit) sont données sur le graphe de la figure 4 (les trois cas précédents y sont représentés)

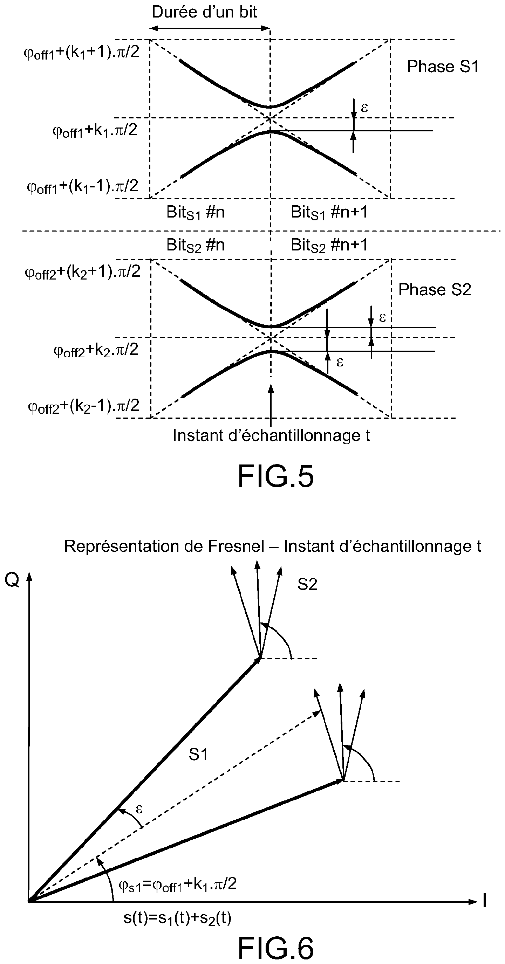

De la même manière, en envisageant les même transitions de bit sur le signal 2, mais les transitions [bit#n = 0 / bit#n+1 = 1] et [bit#n = 1 / bit#n+1 = 0] sur le signal 1, nous obtenons les diagrammes de phase et de Fresnel correspondants, comme représenté en figures 5 et 6.

Ainsi, pour l'éventail de transitions de bits envisagé sur les deux signaux S1 et S2 composant le signal à démoduler, il est possible d'établir une correspondance quasi bijective entre :
- la phase du signal global à l'instant d'échantillonnage d'une part,
- et la paire d'états de phase de chacun des signaux au même instant d'échantillonnage d'autre part.

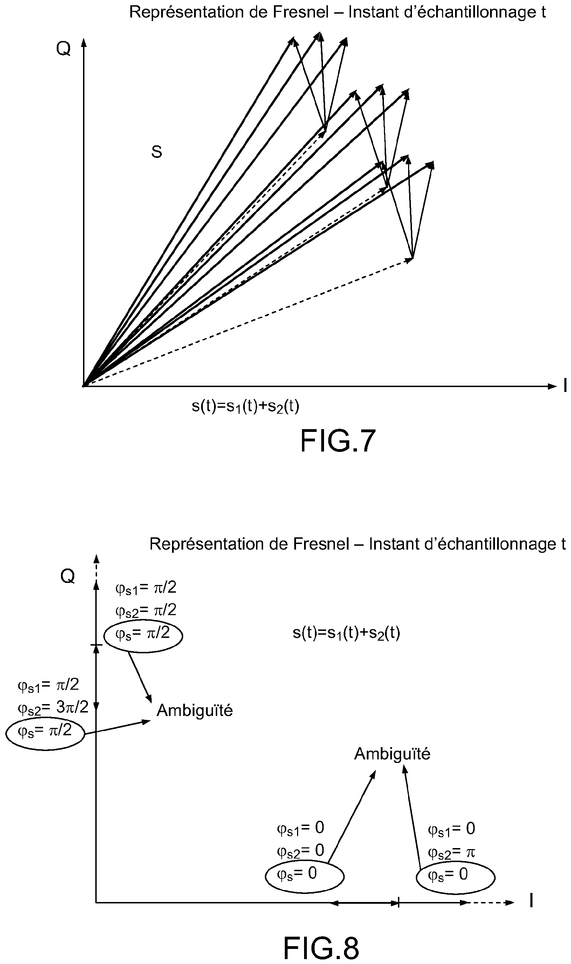

Ceci est illustré par le graphe de la figure 7.
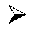 2. Le terme « quasi bijective » est dû à la présence d'ambiguïtés dans le processus de démodulation. Dans le cas particulier illustré en figure 8, une même valeur de la phase du signal global peut être associée à deux paires distinctes d'états de phase de chaque signal composant. De telles ambiguïtés apparaissent dans le cas où les phases des deux signaux composants sont distantes de (k.π).

En démodulant selon la méthode de Viterbi, on parvient à éliminer la plupart de ces ambiguïtés.

Les états du treillis choisis sont alors des paires d'état de phase (signaux S1 et S2). Les itérations successives se font alors comme suit :
- on relève à chaque transition de bit la valeur de la phase globale
- en fonction des paires d'états de phase précédents (étage précédent du treillis de Viterbi), et pour chaque hypothèse de paire de bits reçue, on estime la valeur attendue de la phase globale. Cette phase estimée est fonction de l'écart de puissance des deux signaux, des états de phases des signaux S1, S2, ainsi que des valeurs de ϕ_{off1} et ϕ_{off2}.
- on associe alors à chaque hypothèse de paire de bits reçue une métrique. Cette métrique, qui servira l'exécution de l'algorithme de Viterbi, devra rendre compte de l'écart entre l'hypothèse testée et la réalité mesurée. On peut définir cette métrique comme la différence entre les phases globales mesurée et estimée.
- on conserve ensuite la paire de trains de bits (un pour chaque signal S1 et S2) offrant la plus petite métrique cumulée, cette métrique cumulée étant la somme de la métrique cumulée calculée à l'itération précédente et de la métrique calculée dans la troisième étape de l'itération en cours (point précédent).

Le procédé de l'invention peut également être étendu aux cas où les signaux sont désynchronisés (transitions de bits non coïncidentes), ou de fréquences porteuses différentes : le calcul de la phase globale estimée tient alors compte non seulement des états de phase des signaux S1, S2 et des valeurs de ϕ_{off1} et ϕ_{off2}, mais également du décalage et de la dérive de phase du signal S2 par rapport à S1 (on notera que du fait que la synchronisation en temps et en fréquence est effectuée sur le signal S1, il ne se produit pas de décalage ni de dérive de phase sur ce signal).

La solution selon l'invention présente les avantages suivants. Dans les cas de collisions à deux signaux, cette solution permet une démodulation plus performante du signal principal (le plus fort), ainsi qu'une performance de démodulation non négligeable sur le signal "interférant" (le plus faible). A titre d'exemple, dans un schéma de collision où l'on recevrait simultanément deux signaux, de même fréquence, synchronisés (c'est-à-dire qu'en réception les transitions de bits sont simultanées), pour un signal S2 qui est 5 dB moins fort que le signal S1, et au delà de 60 dB.Hz de rapport signal à bruit sur le signal S1, l'espérance de détection d'un démodulateur simple mono-signal appliqué aux deux signaux S1 et S2 séparément est négligeable, alors que la démodulation multi-signal effectuée selon l'invention permet la démodulation d'au moins un des deux signaux.

## Revendications

1. Procédé de démodulation de deux signaux (S1, S2) pouvant entrer en collision mutuelle, ces signaux étant ceux d'un système à accès, et sur lesquelles une synchronisation temps, fréquence et phase a été effectuée, le procédé consistant à déterminer la valeur de la phase du signal global formé de ces deux signaux, et à déterminer les valeurs des états de phase de chacun de ces deux signaux et donc leur contenus numériques en utilisant la méthode de Viterbi, **caractérisé en ce que** la démodulation de Viterbi consiste, dans le cas où les deux signaux sont « confondus », c'est à dire de même fréquence porteuse et dont les transitions de bits coïncident, à procéder aux itérations suivantes : dans un premier temps on mesure la phase du signal global prélevée aux instants de transition de bits, qui seront donc communs aux deux signaux, dans un deuxième temps, à estimer, en fonction de la paire d'états de phase, un pour chaque signal S1 et S2, provenant de l'itération précédente, et pour chaque hypothèse de paire de bits reçue, un pour chaque signal S1 et S2, la valeur attendue de la phase globale, cette phase estimée étant fonction de l'écart de puissance des deux signaux, des états de phases des deux signaux, ainsi que des valeurs de décalage de phase de ces deux signaux dus à des longueurs de parcours différentes (ϕ_{off1} et ϕ_{off2}), dans un troisième temps, à calculer la métrique associée à chaque hypothèse de paire de bits reçue, cette métrique étant la distance entre les phases globales mesurée et estimée ; et dans un dernier temps à conserver la paire de trains de bits, un pour chaque signal S1 et S2, offrant la plus petite métrique cumulée, cette métrique cumulée étant la somme de la métrique cumulée calculée à l'itération précédente et de la métrique calculée dans la troisième étape de l'itération en cours, dans lequel lorsque les transitions de bits des deux signaux ne sont pas coïncidentes à la réception, les itérations successives de la méthode de Viterbi sont modifiées comme suit : la phase du signal global est prélevée aux instants de transition de bit du signal le plus fort, même si les puissance sont identiques, et le calcul de la phase globale estimée lors de chaque itération tient également compte du décalage de phase du deuxième signal (S2) par rapport au premier signal (S1).

2. Procédé selon la revendication 1, appliqué dans le cas où les deux signaux en collision ont même fréquence porteuse.

3. Procédé selon la revendication 1, **caractérisé en ce que** lorsque les deux signaux en collision ont des fréquences porteuses différentes au sein d'un même canal, les itérations successives de la méthode de Viterbi sont modifiées comme suit : le calcul de la phase globale estimée lors de chaque itération tient également compte de la dérive de phase du deuxième signal (S2) par rapport au premier signal (S1).

4. Procédé selon la revendication 1, 2, ou 3, pour lequel les caractéristiques des signaux reçus et soumis à démodulation suivent les spécifications associées à des systèmes à accès multiple TDMA, FDMA ou CDMA

5. Procédé selon la revendication 1, 2, ou 3, pour lequel les caractéristiques des signaux reçus et soumis à démodulation sont liées aux conditions de réception Doppler ou délai de propagation.

6. Procédé selon la revendication 1, 2, ou 3, appliqué aux communications par satellite

7. Equipement implémentant le procédé tel que décrit dans la revendication 1.

8. Equipement selon la revendication 7embarqué à bord d'un satellite.

9. Equipement selon la revendication 7 intégré à un centre de mission au sol.

## Patentansprüche

1. Verfahren zum Demodulieren von zwei Signalen (S1, S2), die in gegenseitige Kollision treten können, wobei diese Signale die eines Zugriffsystems sind und eine Zeit-, Frequenz- und Phasensynchronisation an ihnen durchgeführt wurde, wobei das Verfahren darin besteht, den Wert der Phase des von diesen beiden Signalen gebildeten globalen Signals zu bestimmen und die Werte der Phasenzustände von jedem dieser beiden Signale und somit deren digitalen Gehalt mithilfe der Viterbi-Methode zu bestimmen, **dadurch gekennzeichnet, dass** die Viterbi-Demodulation in dem Fall, in dem die beiden Signale "zusammenfallen", d.h. bei derselben Trägerfrequenz und mit übereinstimmenden Bitübergängen, darin besteht, die folgenden Iterationen durchzuführen: zu einem ersten Zeitpunkt Messen der bei den Bitübergangszeitpunkten erhaltenen Phase des globalen Signals, die somit den beiden Signalen gemeinsam sind, zu einem zweiten Zeitpunkt Schätzen, in Abhängigkeit von dem Phasenzustandspaar, eines für jedes Signal S1 und S2, von der vorherigen Iteration und für jede empfangene Bitpaarhypothese, eine für jedes Signal S1 und S2, des erwarteten Wertes der globalen Phase, wobei diese geschätzte Phase von der Leistungsabweichung der beiden Signale, den Phasenzuständen der beiden Signale sowie den Phasenversatzwerten dieser beiden Signale aufgrund von unterschiedlichen Lauflängen (ϕ_{off1} und ϕ_{off2}) abhängig ist, zu einem dritten Zeitpunkt Berechnen der mit jeder empfangenen Bitpaarhypothese assoziierten Metrik, wobei diese Metrik der gemessene und geschätzte Abstand zwischen den globalen Phasen ist; und zu einem letzten Zeitpunkt Konservieren des Bitfolgepaares, eine für jedes Signal S1 und S2, das die kleinste kumulierte Metrik bietet, wobei diese kumulierte Metrik die Summe der in der vorherigen Iteration berechneten kumulierten Metrik und der im dritten Schritt der laufenden Iteration berechneten Metrik ist, in der, wenn die Bitübergänge der beiden Signale nicht mit dem Empfang übereinstimmen, die aufeinanderfolgenden Iterationen der Viterbi-Methode wie folgt modifiziert werden: die Phase des globalen Signals wird zu den Bitübergangszeitpunkten des stärksten Signals gewonnen, selbst wenn die Leistungen identisch sind, und die Berechnung der bei jeder Iteration geschätzten globalen Phase berücksichtigt auch den Phasenversatz des zweiten Signals (S2) mit Bezug auf das erste Signal (S1).

2. Verfahren nach Anspruch 1, angewendet auf den Fall, in dem die beiden Kollisionssignale dieselbe Trägerfrequenz haben.

3. Verfahren nach Anspruch 1, **dadurch gekennzeichnet, dass**, wenn die beiden Kollisionssignale unterschiedliche Trägerfrequenzen im Innern eines selben Kanals haben, dann werden die aufeinanderfolgenden Iterationen der Viterbi-Methode wie folgt modifiziert: die Berechnung der bei jeder Iteration geschätzten globalen Phase berücksichtigt auch die Phasenabweichung des zweiten Signals (S2) mit Bezug auf das erste Signal (S1).

4. Verfahren nach Anspruch 1, 2 oder 3, für das die Charakteristiken der empfangenen und demodulierten Signale den mit Mehrfachzugriffsystemen TDMA, FDMA oder CDMA assoziierten Spezifikationen entsprechen.

5. Verfahren nach Anspruch 1, 2 oder 3, für das die Charakteristiken der empfangenen und demodulierten Signale mit den Doppler-Empfangs- oder Ausbreitungsverzögerungsbedingungen verbunden sind.

6. Verfahren nach Anspruch 1, 2 oder 3, angewandt auf Satellitenkommunikationen.

7. Ausrüstung, die das Verfahren wie in Anspruch 1 beschrieben implementiert.

8. Ausrüstung nach Anspruch 7 an Bord eines Satelliten.

9. Ausrüstung nach Anspruch 7, integriert in einer Missionszentrale am Boden.

## Claims

1. Method for the demodulation of two signals (S1, S2) that may mutually collide, these signals being those of an access system, and on which a time, frequency and phase synchronisation has been carried out, the method consisting of determining the value of the phase of the global signal formed from these two signals, and of determining the values of the phase states of each of the two signals and therefore their digital contents using the Viterbi method, **characterised in that** Viterbi demodulation consists, in the case where two signals are "confused", that is to say of the same carrier frequency and whose bit transitions coincide, of carrying out the following iterations: in a first step measuring the phase of the global signal sampled at the bit transition times, which will therefore be common to the two signals, in a second step, estimating, based on the pair of phase states, one for each signal S1 and S2, originating from the preceding iteration, and for each hypothesis of a received pair of bits, one for each signal S1 and S2, the expected value of the global phase, this estimated phase being dependant on the power deviation of the two signals, the phase states of the two signals, as well as the values of phase offset of the two signals resulting from different path lengths (ϕ_{off1} and ϕ_{off2}), in a third step, calculating the metric associated with each hypothesis of a received pair of bits, this metric being the distance measured and estimated between the global phases; and in a final step preserving the pair of bit-streams, one for each signal S1 and S2, offering the smallest aggregate metric, this aggregate metric being the sum of the aggregate metric calculated in the preceding iteration and the metric calculated in the third step of the current iteration, in which when the bit transitions of the two signals are not coincident when received, the successive iterations of the Viterbi method are modified as follows: the phase of the global signal is sampled at the bit transition times of the strongest signal, even if the strengths are identical, and the calculation of the global phase estimated during each iteration also takes into account the phase offset of the second signal (S2) relative to the first signal (S1).

2. Method according to claim 1, applied in the case where two colliding signals have the same carrier frequency.

3. Method according to claim 1, **characterised in that** when the two colliding signals have different carrier frequencies within the same channel, the successive iterations of the Viterbi method are modified as follows: the calculation of the global phase estimated during each iteration also takes into account the phase deviation of the second signal (S2) relative to the first signal (S1).

4. Method according to claim 1, 2 or 3, for which the characteristics of the signals received and subjected to demodulation follow the specifications associated with multi-access TDMA, FDMA or CDMA systems.

5. Method according to claim 1, 2 or 3, for which the characteristics of the signals received and subjected to demodulation are linked to the conditions of the Doppler reception or propagation period.

6. Method according to claim 1, 2 or 3, applied to satellite communications.

7. Equipment implementing the method such as described in claim 1.

8. Equipment according to claim 7 located on board a satellite.

9. Equipment according to claim 7 integrated into a ground-based mission centre.
